# EUROPÄISCHE PATENTSCHRIFT

(11) **EP 4 230 458 B1**
(45) Veröffentlichungstag und Bekanntmachung des Hinweises auf die Patenterteilung: **12.03.2025**
(21) Anmeldenummer: 23153275.5
(22) Anmeldetag: 25.01.2023
(51) Int. Cl.: B60K 6/48, B60K 6/387, B60W 10/06, B60W 10/08, B60W 10/02, B60W 20/40, B60W 20/14

(54) **VERFAHREN ZUM BETREIBEN EINES HYBRIDEN ANTRIEBSSYSTEMS EINES KRAFTFAHRZEUGS, HYBRIDES ANTRIEBSSYSTEM UND KRAFTFAHRZEUG**
METHOD FOR OPERATING A HYBRID DRIVE SYSTEM OF A MOTOR VEHICLE, HYBRID DRIVE SYSTEM AND MOTOR VEHICLE
PROCÉDÉ DE FONCTIONNEMENT D'UN SYSTÈME D'ENTRAÎNEMENT HYBRIDE D'UN VÉHICULE AUTOMOBILE, SYSTÈME D'ENTRAÎNEMENT HYBRIDE ET VÉHICULE AUTOMOBILE

(30) Priorität: 22.02.2022 DE 102022104182
(43) Veröffentlichungstag der Anmeldung: 23.08.2023
(73) Patentinhaber: VOLKSWAGEN AG, 38440 Wolfsburg (DE)
(72) Erfinder: Paukner, Stefan, 38442 Wolfsburg (DE); von Ceumern-Lindenstjerna, Baron Falk-Christian, 38124 Braunschweig (DE); Westendorf, Johannes, 38104 Braunschweig (DE)
(74) Vertreter: Bals & Vogel Patentanwälte PartGmbB

(56) Entgegenhaltungen:
- GB-A- 2 446 270
- US-A1- 2004 025 835
- US-A1- 2021 381 446
- US-A1- 2022 024 441

## Beschreibung

Die vorliegende Erfindung betrifft ein Verfahren zum Betreiben eines hybriden Antriebssystems eines Kraftfahrzeugs. Ferner betrifft die Erfindung ein hybrides Antriebssystem für ein Kraftfahrzeug sowie ein Kraftfahrzeug mit einem hybriden Antriebssystem.

Es sind Kraftfahrzeuge mit hybriden Antriebssystemen bekannt, bei welchen das hybride Antriebssystem eine Verbrennungskraftmaschine, ein Getriebe, einen Triebstranggenerator, einen Abgastrakt für die Verbrennungsmaschine und eine Steuerungsvorrichtung aufweist. Zwischen der Verbrennungskraftmaschine und einem Abtrieb des hybriden Antriebssystems ist eine erste Kupplung angeordnet. Zwischen dem Triebstranggenerator und dem Abtrieb ist eine zweite Kupplung angeordnet. Ein gattungsgemäßes Antriebssystem ist beispielsweise aus den Dokumenten US 2015 / 0239463 A1 und JP 2009-292246 A1 bekannt. Der Triebstranggenerator ist mit der Verbrennungskraftmaschine in Serie angeordnet, sodass bei geöffneter zweiter Kupplung der Triebstranggenerator zusammen mit der Verbrennungskraftmaschine vom Abtrieb abgekoppelt ist. Weitere Antriebssysteme sind aus den Dokumenten US 2021 / 381 446 A1 und US 2004 / 025 835 A1 bekannt.

Ferner sind hybride Antriebssysteme bekannt, die zusätzlich zu einem Triebstranggenerator noch einen Riemenstartergenerator aufweisen, welcher mit der Verbrennungskraftmaschine direkt oder indirekt, beispielsweise über ein Getriebe, gekoppelt ist. Der Riemenstartergenerator ist zusammen mit der Verbrennungskraftmaschine mittels der ersten Kupplung vom Abtrieb und somit auch vom Triebstranggenerator abkoppelbar.

Überdies weisen hybride Antriebssysteme als Verbrennungskraftmaschine oftmals einen Ottomotor sowie zur Reinigung der Abgase des Ottomotors einen Dreiwegekatalysator und oftmals zusätzlich einen Partikelfilter auf. Moderne hybride Antriebssysteme weisen zwei Dreiwegekatalysatoren auf, von denen ein erster Dreiwegekatalysator in der Nähe der Verbrennungskraftmaschine und ein zweiter Dreiwegekatalysator in einer Unterbodenlage des Kraftfahrzeugs angeordnet sind.

Bekannte hybride Antriebssysteme haben den Nachteil, dass in einem Betriebszustand, in welchem die Verbrennungskraftmaschine keinen Schub leistet und vom Abtrieb geschleppt wird, Luft durch die Verbrennungskraftmaschine angesaugt und in dem Abgastrakt zugeführt wird. Hierbei lagert sich Sauerstoff in den Dreiwegekatalysatoren ab, welcher bei Betriebsaufnahme der Verbrennungskraftmaschine zu erhöhten Emissionswerten, insbesondere NOx-Emissionen, führt. Bislang wurde dieses Problem durch gezieltes Ausbrennen des Sauerstoffs aus den Dreiwegekatalysatoren gelöst. Dies führt wiederum zu einem erhöhten Kraftstoffverbrauch des hybriden Antriebssystems.

Es ist daher Aufgabe der vorliegenden Erfindung, die voranstehend beschriebenen Nachteile bei einem hybriden Antriebssystem zu beheben oder zumindest teilweise zu beheben. Insbesondere ist es Aufgabe der vorliegenden Erfindung ein Verfahren zum Betreiben eines hybriden Antriebssystems, ein hybrides Antriebssystem sowie ein Kraftfahrzeug zu schaffen, die auf eine einfache und kostengünstige Art und Weise eine Sauerstoffablagerung im Dreiwegekatalysator vermeiden.

Die voranstehende Aufgabe wird durch die Patentansprüche gelöst. Demnach wird die Aufgabe durch ein Verfahren zum Betreiben eines hybriden Antriebssystems eines Kraftfahrzeugs mit den Merkmalen des unabhängigen Anspruchs 1, durch ein hybrides Antriebssystem für ein Kraftfahrzeug mit den Merkmalen des nebengeordneten Anspruchs 9 sowie durch ein Kraftfahrzeug mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen hybriden Antriebssystem sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zum Betreiben eines hybriden Antriebssystems eines Kraftfahrzeugs gelöst. Das hybride Antriebssystem weist eine Verbrennungskraftmaschine mit einem daran gekoppelten Riemenstartergenerator, ein Getriebe, einen Triebstranggenerator, einen Abgastrakt für die Verbrennungsmaschine, eine Steuerungsvorrichtung und einen Abtrieb auf. Zwischen der Verbrennungskraftmaschine und dem Getriebe ist eine erste Kupplung angeordnet. Zwischen dem Triebstranggenerator und dem Abtrieb kann eine optionale zweite Kupplung angeordnet sein. Das Verfahren weist auf:
- Fahren des Kraftfahrzeugs auf eine erste Geschwindigkeit durch Ansteuern der Verbrennungskraftmaschine und/oder des Triebstranggenerators durch die Steuerungsvorrichtung,
- Bewirken eines Betriebszustands des hybriden Antriebssystems durch die Steuerungsvorrichtung, bei welchem die erste Kupplung geöffnet ist,
- Abschalten der Verbrennungskraftmaschine durch die Steuerungsvorrichtung,
- Detektieren einer Bremsanforderung zum Bremsen des Kraftfahrzeugs durch die Steuerungsvorrichtung,
- Schließen der ersten Kupplung zum Schleppen der Verbrennungskraftmaschine sowie zum Betreiben des Riemenstartergenerators in einem Rekuperationsmodus durch die Steuerungsvorrichtung, und
- Konfigurieren der Verbrennungskraftmaschine durch die Steuerungsvorrichtung derart, dass nur Einlassventile der Verbrennungskraftmaschine während einer Rotation einer Kurbelwelle der Verbrennungskraftmaschine geschlossen bleiben.

Das hybride Antriebssystem, mit welchem das erfindungsgemäße Verfahren durchgeführt wird, weist die Verbrennungskraftmaschine mit dem daran gekoppelten Riemenstartergenerator auf. Die Verbrennungskraftmaschine ist zum Antreiben des Kraftfahrzeugs ausgebildet. Vorzugsweise ist die Verbrennungskraftmaschine als Ottomotor ausgebildet. Der Riemenstartergenerator ist vorzugsweise über ein Getriebe, wie beispielsweise ein einstufiges Zahnradgetriebe, ein Riementrieb oder dergleichen, mit der Kurbelwelle der Verbrennungskraftmaschine mechanisch gekoppelt. Erfindungsgemäß kann im Momentenfluss zwischen dem Riemenstartergenerator und der Verbrennungskraftmaschine eine Zwischenkupplung zum mechanischen Entkoppeln des Riemenstartergenerators von der Kurbelwelle vorgesehen sein. Der Riemenstartergenerator ist ein Elektromotor, der zum Betreiben in einem motorischen Betrieb sowie einem generatorischen Betrieb ausgebildet ist. Der Riemenstartergenerator ist ausgebildet, im motorischen Betrieb elektrische Energie in Rotationsenergie umzuwandeln. Auf diese Weise ist ein zusätzliches Drehmoment zum Unterstützen der Verbrennungskraftmaschine zum Antreiben des Kraftfahrzeugs bereitstellbar. Ferner ist der Riemenstartergenerator ausgebildet, im generatorischen Betrieb Rotationsenergie in elektrische Energie umzuwandeln. Auf diese Weise ist elektrische Energie zum Speichern in einer Batterie des Kraftfahrzeugs oder zum Betreiben des Triebstranggenerators bereitstellbar.

Die Verbrennungskraftmaschine ist über die erste Kupplung sowie das Getriebe mit dem Abtrieb des hybriden Antriebssystems mechanisch gekoppelt. Bei geschlossener erster Kupplung ist ein Drehmoment von der Kurbelwelle der Verbrennungskraftmaschine über das Getriebe auf den Abtrieb übertragbar. Bei geöffneter erster Kupplung ist die Übertragung des Drehmoments unterbrochen. In diesem Zustand ist der Verbrennungsmotor beispielsweise ausschaltbar oder zum Betreiben des Riemenstartergenerators im Generatorbetrieb ausgebildet. Des Weiteren ist die Verbrennungskraftmaschine derart konfigurierbar ausgebildet, dass Einlassventile und/oder Auslassventile der Verbrennungskraftmaschine von einer Rotation der Kurbelwelle entkoppelt schaltbar sind. Somit sind die Einlassventile bzw. Auslassventile beispielsweise bei drehender Kurbelwelle über mehrere Umdrehungen der Kurbelwelle hinweg bzw. über einen längeren Zeitraum verschließbar. Auf diese Weise ist vermeidbar, dass der ausgeschaltete Verbrennungsmotor in einem geschleppten Zustand Luft in den Abgastrakt für die Verbrennungskraftmaschine des hybriden Antriebssystems fördert. Vorzugsweise ist die Verbrennungskraftmaschine derart ausgebildet, dass zumindest die Einlassventile von der Rotation der Kurbelwelle entkoppelt schließbar sind.

Der Abgastrakt ist mit einem Verbrennungsgasauslass der Verbrennungskraftmaschine fluidkommunizierend gekoppelt. Brenngase aus Zylindern der Verbrennungskraftmaschine sind über den Abgastrakt an eine Umgebung des Kraftfahrzeugs ableitbar. Vorzugsweise weist der Abgastrakt einen Partikelfilter, wie beispielsweise einen Ottopartikelfilter, und einen Katalysator, wie beispielsweise einen Dreiwegekatalysator, auf. Es kann erfindungsgemäß vorgesehen sein, dass der Abgastrakt mehrere Partikelfilter und/oder mehrere Katalysatoren oder weitere Vorrichtungen zum Reinigen des Abgases aufweist. Vorzugsweise weist der Abgastrakt einen motornahen ersten Dreiwegekatalysator und einen einem Fahrzeugboden benachbart angeordneten zweiten Dreiwegekatalysator auf. Hierbei ist es bevorzugt, dass der Partikelfilter, welcher vorzugsweise als Ottopartikelfilter ausgebildet ist, in Strömungsrichtung des Abgases zwischen dem ersten Dreiwegekatalysator und dem zweiten Dreiwegekatalysator angeordnet ist.

Der Triebstranggenerator ist beispielsweise direkt oder über eine optionale zweite Kupplung mit dem Abtrieb des hybriden Antriebssystems mechanisch gekoppelt. Mittels des Triebstranggenerators ist ein Drehmoment zum Antreiben des Kraftfahrzeugs auf den Abtrieb übertragbar. Der Triebstranggenerator ist vorzugsweise zwischen einem Getriebeausgang des Getriebes und der optionalen zweiten Kupplung angeordnet. Alternativ hierzu kann der Triebstranggenerator auch zwischen der ersten Kupplung und einem Getriebeeingang des Getriebes angeordnet sein. Hierbei ist es bevorzugt, dass das Getriebe zwischen dem Triebstranggenerator und der optionalen zweiten Kupplung angeordnet ist. In einer alternativen Ausführungsform der Erfindung sind der Triebstranggenerator und die optionale zweite Kupplung derart mit dem Abtrieb mechanisch gekoppelt, dass bei geöffneter zweiter Kupplung der Triebstranggenerator vom Abtrieb entkoppelt und bei gleichzeitig geschlossener erster Kupplung die Verbrennungskraftmaschine mit dem Abtrieb gekoppelt ist. Bei dieser Konfiguration ist vorzugsweise eine dritte Kupplung vorgesehen, mittels welcher die Verbrennungskraftmaschine mit Riemenstartergenerator, die erste Kupplung, die zweite Kupplung, das Getriebe und der Triebstranggenerator vom Abtrieb entkoppelbar sind.

Die Steuerungsvorrichtung ist zum Betreiben des hybriden Antriebssystems ausgebildet. Somit ist die Durchführung des erfindungsgemäßen Verfahrens mittels der Steuerungsvorrichtung koordinierbar. Das bedeutet, dass mittels der Steuerungsvorrichtung Befehle an Komponenten des hybriden Antriebssystems, wie beispielsweise eine Einspritzpumpe zum Einspritzen von Kraftstoff in die Zylinder der Verbrennungskraftmaschine, das Getriebe zum Einstellen eines ausgewählten Gangs, die erste Kupplung, die optionale zweite Kupplung, die Einlassventile, die Auslassventile, den Triebstranggenerator oder den Riemenstartergenerator, zur Durchführung einzelner Aspekte des erfindungsgemäßen Verfahrens generierbar und vorzugsweise auch übermittelbar sind. Überdies ist die Steuerungsvorrichtung ausgebildet, Befehle zum Betreiben des hybriden Antriebssystems entgegenzunehmen, wie beispielsweise einen Geschwindigkeitsbefehl eines Gaspedals, einer Begrenzungsvorrichtung zum Einhalten gesetzlicher Geschwindigkeitsbegrenzungen, eines Eingabeinterfaces einer Geschwindigkeitsregelvorrichtung oder dergleichen, sowie eines Bremsbefehls eines Bremspedals, der Begrenzungsvorrichtung, des Eingabeinterfaces der Geschwindigkeitsregelvorrichtung oder dergleichen. Überdies ist die Steuerungsvorrichtung vorzugsweise zum Überwachen des hybriden Antriebssystems ausgebildet, wie beispielsweise von Drehzahlen, Temperaturen, Konfigurationen oder dergleichen einzelner oder mehrerer Komponenten des hybriden Antriebssystems.

Zunächst wird das Kraftfahrzeug auf die erste Geschwindigkeit gefahren. Dies erfolgt vorzugsweise durch Beschleunigen des Kraftfahrzeugs von einer niedrigeren Geschwindigkeit auf die erste Geschwindigkeit. In diesem Fall wird durch die Steuerungsvorrichtung vorzugsweise die Verbrennungskraftmaschine und/oder der Triebstranggenerator entsprechend angesteuert. Ebenso kann das Fahren auf die erste Geschwindigkeit durch Verzögern des Kraftfahrzeugs von einer höheren Geschwindigkeit auf die erste Geschwindigkeit erfolgen. In diesem Fall wird durch die Steuerungsvorrichtung vorzugsweise eine konventionelle Bremsvorrichtung des Kraftfahrzeugs zum Bremsen des Kraftfahrzeugs, wie beispielsweise eine Scheibenbremsvorrichtung, eine Trommelbremsvorrichtung oder dergleichen, angesteuert. Alternativ zum Bremsen kann die erste Geschwindigkeit auch durch Rollenlassen des Kraftfahrzeugs erreicht werden. Die erste Geschwindigkeit ist vorzugsweise höher als 50 km/h und besonders bevorzugt höher als 100 km/h.

Bei der ersten Geschwindigkeit wird durch die Steuerungsvorrichtung der Betriebszustand des hybriden Antriebssystems bewirkt, bei welchem die erste Kupplung geöffnet ist. Dies kann beispielsweise durch gezieltes Öffnen der ersten Kupplung erfolgen. Eine optionale zweite Kupplung ist in diesem Betriebszustand ebenfalls geöffnet. Dies kann beispielsweise durch gezieltes Öffnen der zweiten Kupplung erfolgen. Alternativ kann die erste Kupplung bereits geöffnet sein. Unter einer geöffneten Kupplung wird im Rahmen der Erfindung eine Entkoppelstellung der Kupplung verstanden, sodass ein Momentenfluss durch die Kupplung unterbrochen ist. Unter einer geschlossenen Kupplung wird im Rahmen der Erfindung eine Koppelstellung der Kupplung verstanden, sodass ein Momentenfluss durch die Kupplung hergestellt ist.

Mittels der Steuerungsvorrichtung wird die Verbrennungskraftmaschine abgeschaltet. Dies kann beispielsweise vor oder nach dem Öffnen der ersten Kupplung erfolgen. Vorzugsweise erfolgt das Abschalten der Verbrennungskraftmaschine nach dem Öffnen der ersten Kupplung. Unter einem Abschalten der Verbrennungskraftmaschine wird im Rahmen der Erfindung verstanden, dass die Verbrennungskraftmaschine nicht mehr im verbrennungsmotorischen Betrieb betrieben wird, sodass die Verbrennungskraftmaschine - abgesehen von einem Trägheitsmoment der noch rotierenden Kurbelwelle - kein Drehmoment zum Antreiben des Riemenstartergenerators oder des Kraftfahrzeugs bereitstellt.

Wird nun eine Bremsanforderung zum Bremsen des Kraftfahrzeugs erzeugt, wird dies von der Steuerungsvorrichtung detektiert. Die Bremsanforderung kann beispielsweise durch die Betätigung des Bremspedals durch einen Fahrer des Kraftfahrzeugs, eine manuelle Eingabe am Eingabeinterface der Geschwindigkeitsregelvorrichtung, die Begrenzungsvorrichtung zum Einhalten gesetzlicher Geschwindigkeitsbegrenzungen oder dergleichen erfolgen. Die Steuerungsvorrichtung analysiert die Bremsanforderung und führt Maßnahmen zum Verzögern des Kraftfahrzeugs entsprechend der Bremsanforderung durch.

Eine in diesem Rahmen durchgeführte Maßnahme ist das Schließen der ersten Kupplung durch die Steuerungsvorrichtung, sodass die Kurbelwelle der Verbrennungskraftmaschine mit dem Abtrieb des hybriden Antriebssystems zur Drehmomentübertragung mechanisch gekoppelt ist.

Je nach Ausbildung des hybriden Antriebssystems kann zur Herstellung dieses Betriebszustands auch ein Schließen der optionalen zweiten Kupplung erforderlich sein. Die Verbrennungskraftmaschine ist somit in einem Schleppmodus und wird über den Abtrieb angetrieben. Der mit der Verbrennungskraftmaschine mechanisch gekoppelte Riemenstartergenerator wird somit in dem Rekuperationsmodus betrieben und wandelt Rotationsenergie in elektrische Energie um. Hierbei stellen die Verbrennungskraftmaschine und der Riemenstartergenerator ein Bremsmoment zum Bremsen des Kraftfahrzeugs bereit. Zusätzlich kann eine Betätigung einer zusätzlichen konventionellen Bremsvorrichtung, wie beispielsweise einer Scheibenbremsvorrichtung, einer Trommelbremsvorrichtung oder dergleichen, zum Abbremsen des Kraftfahrzeugs erfolgen, falls das bereitgestellte Bremsmoment nicht ausreichend groß ist, um die Bremsanforderung zu erfüllen.

Eine weitere in diesem Rahmen durchgeführte Maßnahme umfasst das derartige Konfigurieren der Verbrennungskraftmaschine durch die Steuerungsvorrichtung, dass nur die Einlassventile der Verbrennungskraftmaschine während einer Rotation der Kurbelwelle der Verbrennungskraftmaschine geschlossen bleiben. Hierfür sind die Einlassventile bzw. die Auslassventile beispielsweise gezielt elektrisch ansteuerbar ausgebildet, sodass keine mechanische Zwangskopplung zwischen der Drehung der Kurbelwelle und den Einlassventilen bzw. den Auslassventilen besteht. Alternativ können die Einlassventile bzw. die Auslassventile auch von einer Nockenwelle der Verbrennungskraftmaschine abkoppelbar ausgebildet sein. Somit bleibt eine Ventilstellung der Einlassventile bzw. der Auslassventile auch während einer Rotation der Kurbelwelle geschlossen.

Somit wird während des Schleppens der Verbrennungskraftmaschine keine Luft von der Verbrennungskraftmaschine angesaugt und in den Abgastrakt gepumpt.

Ein erfindungsgemäßes Verfahren zum Betreiben eines hybriden Antriebssystems eines Kraftfahrzeugs hat gegenüber herkömmlichen Verfahren den Vorteil, dass mit einfachen Mitteln sowie auf eine kostengünstige Art und Weise der Riemenstartergenerator im Rekuperationsmodus betreibbar ist, wobei durch die gezielte Konfiguration der Einlassventile und/oder Auslassventile der Verbrennungskraftmaschine ein Fördern von Luft in den Abgastrakt vermieden ist. Somit ist eine Ansammlung von Sauerstoff in Abgasbehandlungsvorrichtungen des Abgastrakts, wie beispielsweise Katalysatoren, verhinderbar und ein aufwendiges sowie kraftstoffverbrauchendes Ausbrennen des Sauerstoffs vermeidbar.

Gemäß einer bevorzugten Weiterentwicklung der Erfindung kann bei einem Verfahren vorgesehen sein, dass die Steuerungsvorrichtung die geschleppte Verbrennungskraftmaschine gezielt derart konfiguriert, dass die Einlassventile und Auslassventile einen vordefinierten Luftstrom in den Abgastrakt des Kraftfahrzeugs fördern. Diese Konfiguration erfolgt vorzugsweise kurz vor einem Starten der Verbrennungskraftmaschine. Weiter bevorzugt erfolgt diese Konfiguration bei einer Fahrzeuggeschwindigkeit, bei welcher die Durchführung dieser Konfiguration besonders schonend und verschleißarm durchführbar ist. Dies hat den Vorteil, dass mit einfachen Mitteln sowie auf eine kostengünstige Art und Weise ein Startvorgang der Verbrennungskraftmaschine bei einem rollenden Kraftfahrzeug verbesserbar ist. Ferner sind somit Verbrennungsgasrückstände aus den Zylindern ableitbar.

Es ist erfindungsgemäß bevorzugt, dass die Steuerungsvorrichtung eine Kraftstoffeinspritzvorrichtung zum gezielten Einspritzen von Kraftstoff in einen oder mehrere Zylinder der geschleppten Verbrennungskraftmaschine ansteuert. Die Verbrennungskraftmaschine befindet sich zumindest zu Beginn des gezielten Einspritzens in einem Schleppmodus, sodass das Kraftstoff-Luft-Gemisch in den Zylindern sich nicht entzündet. Dies erfolgt vorzugsweise ebenfalls kurz vor einem Starten der Verbrennungskraftmaschine. Dies hat den Vorteil, dass mit einfachen Mitteln sowie auf eine kostengünstige Art und Weise der Startvorgang der Verbrennungskraftmaschine bei einem rollenden Kraftfahrzeug verbesserbar ist. Ferner ist somit ein gezieltes Ausbrennen von Sauerstoff aus Abgasaufbereitungsvorrichtungen des Abgastrakts, wie beispielsweise Katalysatoren, Partikelfiltern oder dergleichen, bewirkbar.

Weiter bevorzugt ist der Triebstranggenerator über eine zweite Kupplung mit dem Abtrieb des hybriden Antriebssystems mechanisch koppelbar, wobei die Steuerungsvorrichtung die zweite Kupplung zum Betreiben des Triebstranggenerators in dem Rekuperationsmodus zum Bremsen des Kraftfahrzeugs schließt. Bei einem hybriden Antriebssystem, bei welchem die erste Kupplung und die zweite Kupplung im Momentenfluss zwischen der Verbrennungskraftmaschine und dem Abtrieb angeordnet sind, muss die zweite Kupplung vor der ersten Kupplung geschlossen werden, da bei dieser Konfiguration zur Übertragung eines Antriebsmoments von der Verbrennungskraftmaschine auf den Abtrieb sowohl die erste Kupplung als auch die zweite Kupplung geschlossen sein muss. Durch das Schließen der zweiten Kupplung stellt der Triebstranggenerator ein Bremsmoment bereit und erzeugt dabei elektrische Energie. Nach dem nachfolgenden Schließen der ersten Kupplung stellen die Verbrennungskraftmaschine und der Riemenstartergenerator ein zusätzliches Bremsmoment bereit, sodass ein höheres Gesamtbremsmoment bereitgestellt ist. Bei einem hybriden Antriebssystem, bei welchem die erste Kupplung im Momentenfluss zwischen der Verbrennungskraftmaschine und dem Abtrieb und die zweite Kupplung parallel zur ersten Kupplung im Momentenfluss zwischen dem Triebstranggenerator und dem Abtrieb angeordnet ist, kann das Schließen der zweiten Kupplung erfindungsgemäß unabhängig von einem Zeitpunkt des Schließens der ersten Kupplung erfolgen, beispielsweise vorher, nachher oder währenddessen. Dies hat den Vorteil, dass mit einfachen Mitteln sowie auf eine kostengünstige Art und Weise eine Rekuperationsleistung zum Bremsen des Kraftfahrzeugs maximierbar ist.

In einer besonders bevorzugten Ausgestaltung der Erfindung kann bei einem Verfahren vorgesehen sein, dass die zweite Kupplung zum Abbremsen des Kraftfahrzeugs vor der ersten Kupplung geschlossen wird. Somit ist zunächst ein Bremsmoment durch den Triebstranggenerator bereitgestellt. Durch anschließendes Schließen der ersten Kupplung ist ein zusätzliches Bremsmoment durch die Verbrennungskraftmaschine und den Riemenstartergenerator bereitstellbar. Dies hat den Vorteil, dass mit einfachen Mitteln sowie auf eine kostengünstige Art und Weise, insbesondere bei verhältnismäßig geringen Bremsanforderungen, ein besonders sanftes Abbremsen sowie ein besonders effizientes Rekuperieren gewährleistet sind.

Vorzugsweise wird die erste Kupplung wieder geöffnet, wenn das Kraftfahrzeug eine zweite Geschwindigkeit erreicht, wobei die zweite Geschwindigkeit kleiner ist als die erste Geschwindigkeit. Vorzugsweise beträgt die zweite Geschwindigkeit zwischen 15 km/h und 30 km/h, besonders bevorzugt zwischen 20 km/h und 25 km/h. Unterhalb einer derartigen Geschwindigkeit ist ein effizientes Rekuperieren durch den Riemenstartergenerator nicht mehr gewährleistet. Durch Öffnen der ersten Kupplung erfolgt das Rekuperieren nur noch durch den Triebstranggenerator. Ein eventuell zusätzlich erforderliches Bremsmoment ist durch eine Bremsvorrichtung, wie beispielsweise eine Scheibenbremsvorrichtung, eine Trommelbremsvorrichtung oder dergleichen, erzeugbar. Dies hat den Vorteil, dass mit einfachen Mitteln sowie auf eine kostengünstige Art und Weise ein besonders sanftes Abbremsen sowie ein besonders effizientes Rekuperieren gewährleistet sind.

Gemäß einer bevorzugten Ausführungsform der Erfindung umfasst das Konfigurieren der Verbrennungskraftmaschine durch die Steuerungsvorrichtung ein Schalten einer Nockenwelle auf Nullnocken. Derartige schaltbare Nocken sind bereits bei Antriebssystemen für Kraftfahrzeuge bekannt, welche zur Reduzierung eines Kraftstoffverbrauchs sowie eines Abgasausstoßes mit einer reduzierten Zylinderzahl betreibbar sind. Hierbei sind die Nocken der abzuschaltenden Zylinder von der Nockenwelle entkoppelbar, sodass die Einlassventile und/oder Auslassventile der abgeschalteten Zylinder bei einer Drehung der Nockenwelle in ihrer Position, beispielsweise einer Verschlussstellung, verbleiben. Die abgeschalteten Zylinder sind bei einer erhöhten Leistungsanforderung, wie beispielsweise einem Kickdown, durch Ankoppeln der jeweiligen Nocken an die Nockenwelle wieder aktivierbar. Dies hat den Vorteil, dass mit einfachen Mitteln sowie auf eine kostengünstige Art und Weise ein besonders zuverlässiges Schließen der Einlassventile bzw. Auslassventile gewährleistet ist.

Besonders bevorzugt wird mit einer Evakuierungsvorrichtung des hybriden Antriebssystems Luft aus dem Abgastrakt evakuiert. Vorzugsweise wird alternativ oder zusätzlich mittels einer Begasungsvorrichtung des hybriden Antriebssystems ein sauerstofffreies oder sauerstoffreduziertes Gas in den Abgastrakt zum Verdrängen des im Abgastrakt angeordneten Sauerstoffs eingebracht. Die Evakuierungsvorrichtung weist vorzugsweise eine Vakuumkammer zur Aufnahme der Luft auf. Die Evakuierungsvorrichtung ist vorzugsweise ausgebildet, die Vakuumkammer im verbrennungsmotorischen Betrieb der Verbrennungskraftmaschine wieder zu evakuieren. Die Begasungsvorrichtung weist vorzugsweise eine Druckkammer auf, in welcher das Gas speicherbar ist. Vorzugsweise ist die Begasungsvorrichtung ausgebildet, die Druckkammer im verbrennungsmotorischen Betrieb der Verbrennungskraftmaschine mit Abgas der Verbrennungskraftmaschine zu befüllen, vorzugsweise mit Überdruck, insbesondere mehrfachem Überdruck, gegenüber der Atmosphäre. Dies hat den Vorteil, dass mit einfachen Mitteln sowie auf eine kostengünstige Art und Weise Sauerstoffrückstände aus dem Abgastrakt entfernbar sind.

Gemäß einem zweiten Aspekt der Erfindung wird die Aufgabe durch ein hybrides Antriebssystem für ein Kraftfahrzeug gelöst. Das hybride Antriebssystem weist eine Verbrennungskraftmaschine mit einem daran gekoppelten Riemenstartergenerator, ein Getriebe, einen Triebstranggenerator, einen Abgastrakt für die Verbrennungsmaschine und eine Steuerungsvorrichtung auf. Zwischen der Verbrennungskraftmaschine und einem Abtrieb des hybriden Antriebssystems ist eine erste Kupplung angeordnet. Zwischen dem Triebstranggenerator und dem Abtrieb kann eine optionale zweite Kupplung angeordnet sein. Erfindungsgemäß ist das erfindungsgemäße hybride Antriebssystem zur Durchführung eines Verfahrens gemäß dem ersten Aspekt der Erfindung ausgebildet. Die einzelnen Komponenten des hybriden Antriebssystems sind bereits im Zusammenhang mit dem erfindungsgemäßen Verfahren hinreichend beschrieben.

Bei dem erfindungsgemäßen hybriden Antriebssystem ergeben sich sämtliche Vorteile, die bereits zu einem Verfahren zum Betreiben eines hybriden Antriebssystems eines Kraftfahrzeugs gemäß dem ersten Aspekt der Erfindung beschrieben worden sind. Demnach hat das erfindungsgemäße hybride Antriebssystem gegenüber herkömmlichen hybriden Antriebssystemen den Vorteil, dass mit einfachen Mitteln sowie auf eine kostengünstige Art und Weise der Riemenstartergenerator im Rekuperationsmodus betreibbar ist, wobei durch die gezielte Konfigurierbarkeit der Einlassventile und/oder Auslassventile der Verbrennungskraftmaschine ein Fördern von Luft in den Abgastrakt vermeidbar ist. Somit ist eine Ansammlung von Sauerstoff in Abgasbehandlungsvorrichtungen des Abgastrakts, wie beispielsweise Katalysatoren, verhinderbar und ein aufwendiges sowie kraftstoffverbrauchendes Ausbrennen des Sauerstoffs vermeidbar.

Gemäß einem dritten Aspekt der Erfindung wird die Aufgabe durch ein Kraftfahrzeug gelöst. Erfindungsgemäß weist das Kraftfahrzeug ein hybrides Antriebssystem gemäß dem zweiten Aspekt der Erfindung auf. Das hybride Antriebssystem weist demnach eine Verbrennungskraftmaschine mit einem daran gekoppelten Riemenstartergenerator, ein Getriebe, einen Triebstranggenerator, einen Abgastrakt für die Verbrennungsmaschine und eine Steuerungsvorrichtung auf. Zwischen der Verbrennungskraftmaschine und einem Abtrieb des hybriden Antriebssystems ist eine erste Kupplung angeordnet. Zwischen dem Triebstranggenerator und dem Abtrieb ist eine zweite Kupplung angeordnet. Erfindungsgemäß ist das hybride Antriebssystem zur Durchführung eines Verfahrens gemäß dem ersten Aspekt der Erfindung ausgebildet.

Bei dem erfindungsgemäßen Kraftfahrzeug ergeben sich sämtliche Vorteile, die bereits zu einem Verfahren zum Betreiben eines hybriden Antriebssystems eines Kraftfahrzeugs gemäß dem ersten Aspekt der Erfindung sowie zu einem hybriden Antriebssystem für ein Kraftfahrzeug gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise der Riemenstartergenerator im Rekuperationsmodus betreibbar ist, wobei durch die gezielte Konfigurierbarkeit der Einlassventile und/oder Auslassventile der Verbrennungskraftmaschine ein Fördern von Luft in den Abgastrakt vermeidbar ist. Somit ist eine Ansammlung von Sauerstoff in Abgasbehandlungsvorrichtungen des Abgastrakts, wie beispielsweise Katalysatoren, verhinderbar und ein aufwendiges sowie kraftstoffverbrauchendes Ausbrennen des Sauerstoffs vermeidbar.

Ein erfindungsgemäßes Verfahren, ein erfindungsgemäßes hybrides Antriebssystem sowie ein erfindungsgemäßes Kraftfahrzeug werden nachfolgend anhand von Zeichnungen näher erläutert. Es zeigen jeweils schematisch:
- Figur 1: in einem Ablaufdiagramm eine bevorzugte Ausführungsform eines erfindungsgemäßen Verfahrens zum Betreiben eines hybriden Antriebssystems eines Kraftfahrzeugs,
- Figur 2: in einer Prinzipskizze eine bevorzugte erste Ausführungsform eines erfindungsgemäßen hybriden Antriebssystems,
- Figur 3: in einer Prinzipskizze eine bevorzugte zweite Ausführungsform eines erfindungsgemäßen hybriden Antriebssystems,
- Figur 4: in einer Prinzipskizze eine bevorzugte dritte Ausführungsform eines erfindungsgemäßen hybriden Antriebssystems,
- Figur 5: in einer Prinzipskizze eine bevorzugte vierte Ausführungsform eines erfindungsgemäßen hybriden Antriebssystems, und
- Figur 6: in einer Seitenansicht eine bevorzugte Ausführungsform eines erfindungsgemäßen Kraftfahrzeugs.

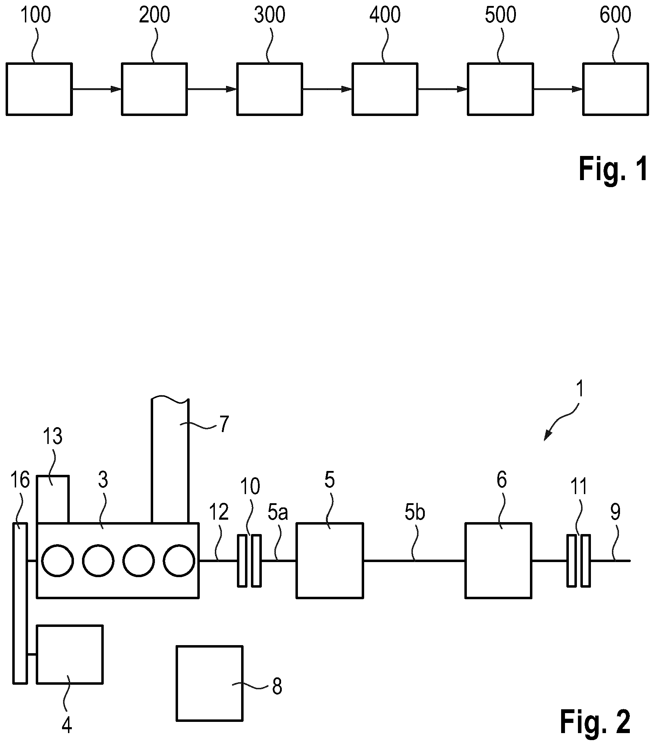

Elemente mit gleicher Funktion und Wirkungsweise sind in den Figuren 1 bis 6 jeweils mit denselben Bezugszeichen versehen.

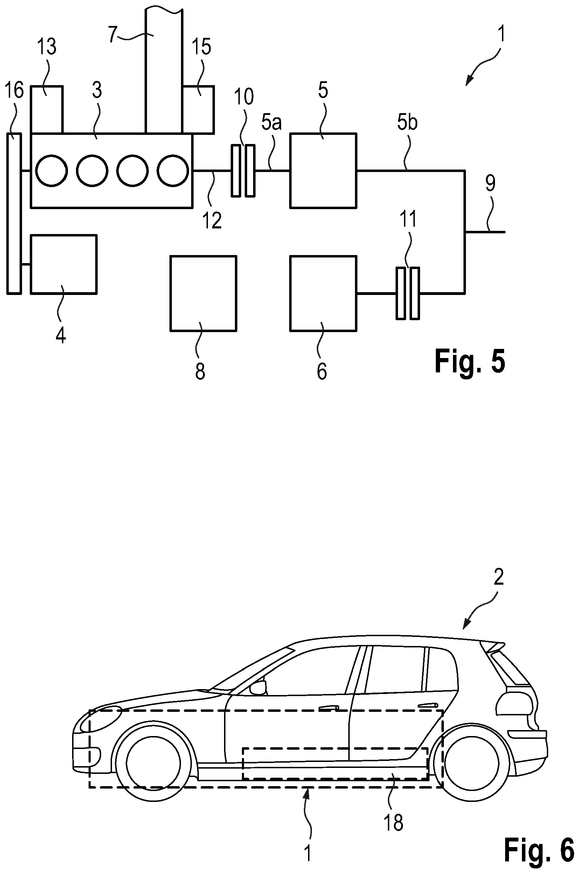

In Fig. 1 ist eine bevorzugte Ausführungsform eines erfindungsgemäßen Verfahrens zum Betreiben eines hybriden Antriebssystems 1 (vgl. Fig. 2) eines Kraftfahrzeugs 2 (vgl. Fig. 6) schematisch in einem Ablaufdiagramm dargestellt. Im Rahmen einer ersten Verfahrensaktion 100 wird das hybride Antriebssystem 1 mittels einer Steuerungsvorrichtung 8 (vgl. Fig. 2) des hybriden Antriebssystems 1 derart angesteuert, dass das Kraftfahrzeug 2 auf eine erste Geschwindigkeit gebracht wird. Dies erfolgt vorzugsweise durch Beschleunigen des Kraftfahrzeugs 2. Gemäß einer zweiten Verfahrensaktion 200 wird ein Betriebszustand des hybriden Antriebssystems 1 durch die Steuerungsvorrichtung 8 bewirkt, bei welchem eine erste Kupplung 10 des hybriden Antriebssystems 1 geöffnet ist. Dies kann beispielsweise durch Öffnen der ersten Kupplung 10 erfolgen. Alternativ kann die erste Kupplung 10 bereits geöffnet sein und verbleibt somit in der Öffnungsstellung. Gemäß einer dritten Verfahrensaktion 300 wird die Verbrennungskraftmaschine 3 mittels der Steuerungsvorrichtung 8 abgeschaltet.

Gemäß einer vierten Verfahrensaktion 400 wird mittels der Steuerungsvorrichtung 8 eine Bremsanforderung zum Bremsen des Kraftfahrzeugs 2 detektiert. Gemäß einer fünften Verfahrensaktion 500 wird die erste Kupplung 10 durch die Steuerungsvorrichtung 8 geschlossen, sodass die ausgeschaltete Verbrennungskraftmaschine 3 geschleppt betrieben wird. Ein mit der Verbrennungskraftmaschine 3 mechanisch gekoppelter Riemenstartergenerator 4 (vgl. Fig. 2) wird hierbei ebenfalls geschleppt und somit in einem generatorischen Betrieb zur Erzeugung elektrischer Energie betrieben. Somit stellen die Verbrennungskraftmaschine 3 und der Riemenstartergenerator 4 ein Bremsmoment zum Bremsen des Kraftfahrzeugs 2 bereit. Gemäß einer sechsten Verfahrensaktion 600 wird eine Verbrennungskraftmaschine 3 des hybriden Antriebssystems 1 mittels der Steuerungsvorrichtung 8 derart konfiguriert, dass Einlassventile und/oder Auslassventile der Verbrennungskraftmaschine 3 während einer Rotation einer Kurbelwelle 12 (vgl. Fig. 2) der Verbrennungskraftmaschine 3 geschlossen bleiben. Dies erfolgt beispielsweise durch Entkoppeln der Einlassventile und/oder Auslassventile von einer Nockenwelle der Verbrennungskraftmaschine 3. Die sechste Verfahrensaktion 600 wird vorzugsweise direkt oder unmittelbar nach der fünften Verfahrensaktion 500 durchgeführt, um eine geförderte Luftmenge zu minimieren.

Fig. 2 zeigt eine bevorzugte erste Ausführungsform eines erfindungsgemäßen hybriden Antriebssystems 1 schematisch in einer Prinzipskizze. Das hybride Antriebssystem 1 weist eine Verbrennungskraftmaschine 3 auf, welche über einen Riementrieb 16 mit einem Riemenstartergenerator 4 mechanisch gekoppelt ist. Die Verbrennungskraftmaschine 3 weist eine Kraftstoffeinspritzvorrichtung 13 zum Einspritzen von Kraftstoff in Zylinder der Verbrennungskraftmaschine 3 auf. Zum Abführen der Verbrennungsgase ist an der Verbrennungskraftmaschine 3 ein Abgastrakt 7 des hybriden Antriebssystems 1 angeordnet. Eine Kurbelwelle 12 der Verbrennungskraftmaschine 3 ist über eine erste Kupplung 10 mit einem Getriebeeingang 5a eines Getriebes 5 mechanisch koppelbar sowie entkoppelbar. An einem Getriebeausgang 5b des Getriebes 5 ist ein Triebstranggenerator 6 angeordnet. Der Triebstranggenerator 6 ist über eine optionale zweite Kupplung 11 mit einem Abtrieb 9 des hybriden Antriebssystems 1 mechanisch koppelbar sowie entkoppelbar. Zum Steuern der Komponenten des hybriden Antriebssystems 1 weist das hybride Antriebssystem 1 eine Steuerungsvorrichtung 8 auf. Eine alternative Ausführungsform der Erfindung unterscheidet sich von der ersten Ausführungsform in dem Merkmal, dass keine zweite Kupplung 11 vorhanden ist.

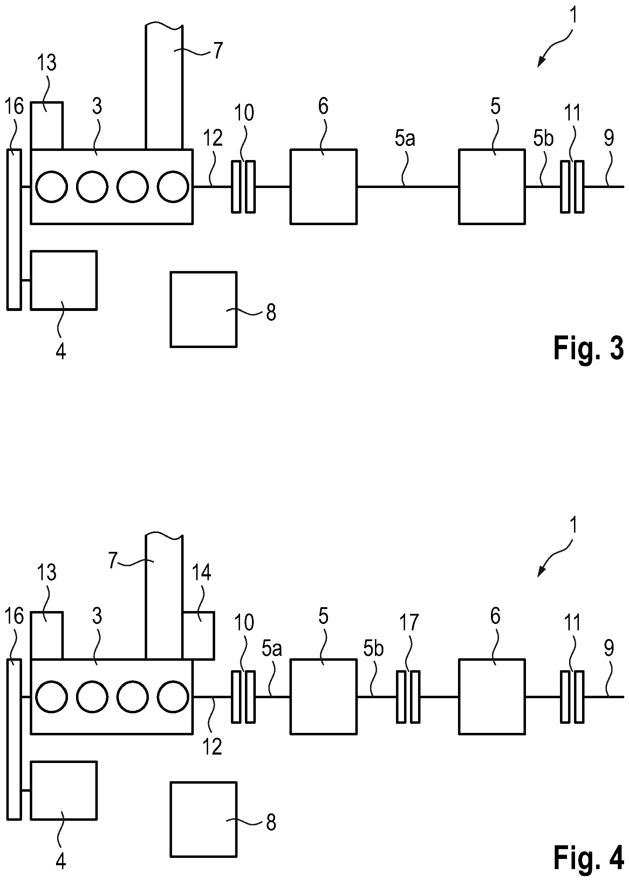

In Fig. 3 ist eine bevorzugte zweite Ausführungsform eines erfindungsgemäßen hybriden Antriebssystems 1 schematisch in einer Prinzipskizze abgebildet. Die zweite Ausführungsform unterscheidet sich von der ersten Ausführungsform in einer Anordnung des Triebstranggenerators 6. Der Triebstranggenerator 6 ist im Momentenfluss zwischen der ersten Kupplung 10 und dem Getriebeeingang 5a angeordnet. Eine alternative Ausführungsform der Erfindung unterscheidet sich von der zweiten Ausführungsform in dem Merkmal, dass keine zweite Kupplung 11 vorhanden ist.

Fig. 4 zeigt eine bevorzugte dritte Ausführungsform eines erfindungsgemäßen hybriden Antriebssystems 1 schematisch in einer Prinzipskizze. Die dritte Ausführungsform unterscheidet sich von der ersten Ausführungsform in einer dritten Kupplung 17, die im Momentenfluss zwischen dem Getriebeausgang 5b und dem Triebstranggenerator 6 angeordnet ist. Über die dritte Kupplung 17 ist das Getriebe 5 vom Triebstranggenerator 6 und dem Abtrieb 9 abkoppelbar. Überdies weist das hybride Antriebssystem 1 eine optionale Evakuierungsvorrichtung 14 zum Evakuieren von Luft aus dem Abgastrakt 7 auf. Eine alternative Ausführungsform der Erfindung unterscheidet sich von der dritten Ausführungsform in dem Merkmal, dass keine zweite Kupplung 11 vorhanden ist.

In Fig. 5 ist eine bevorzugte vierte Ausführungsform eines erfindungsgemäßen hybriden Antriebssystems 1 schematisch in einer Prinzipskizze dargestellt. Die vierte Ausführungsform unterscheidet sich von der ersten Ausführungsform in einer Anordnung des Triebstranggenerators 6 mit der zweiten Kupplung 11 parallel zum Momentenfluss der Verbrennungskraftmaschine 3 mit dem Riemenstartergenerator 4 und dem Getriebe 5. Bei dieser Anordnung ist bei geöffneter zweiter Kupplung 11 der Triebstranggenerator 6 vom Abtrieb 9 mechanisch entkoppelt, wobei das Getriebe 5 weiterhin mit dem Abtrieb 9 mechanisch gekoppelt ist. Ferner weist das hybride Antriebssystem 1 eine optionale Begasungsvorrichtung 15 auf. Die Begasungsvorrichtung 15 ist ausgebildet, im Arbeitsbetrieb der Verbrennungskraftmaschine 3 erzeugte Brenngase unter Überdruck zur Atmosphäre zu speichern. Ferner ist die Begasungsvorrichtung 15 ausgebildet, die gespeicherten Abgase bei abgeschalteter Verbrennungskraftmaschine 3 in den Abgastrakt 7 abzuführen. Auf diese Weise ist Luft aus dem Abgastrakt 7 verdrängbar. Eine alternative Ausführungsform der Erfindung unterscheidet sich von der vierten Ausführungsform in dem Merkmal, dass keine zweite Kupplung 11 vorhanden ist.

Fig. 6 zeigt eine bevorzugte Ausführungsform eines erfindungsgemäßen Kraftfahrzeugs 2 schematisch in einer Seitenansicht. Das Kraftfahrzeug 2 weist ein erfindungsgemäßes hybrides Antriebssystem 1 mit einer Batterie 18 auf.

### Bezugszeichenliste

- 1: hybrides Antriebssystem
- 2: Kraftfahrzeug
- 3: Verbrennungskraftmaschine
- 4: Riemenstartergenerator
- 5: Getriebe
- 5a: Getriebeeingang
- 5b: Getriebeausgang
- 6: Triebstranggenerator
- 7: Abgastrakt
- 8: Steuerungsvorrichtung
- 9: Abtrieb
- 10: erste Kupplung
- 11: zweite Kupplung
- 12: Kurbelwelle
- 13: Kraftstoffeinspritzvorrichtung
- 14: Evakuierungsvorrichtung
- 15: Begasungsvorrichtung
- 16: Riementrieb
- 17: dritte Kupplung
- 18: Batterie

- 100: erste Verfahrensaktion
- 200: zweite Verfahrensaktion
- 300: dritte Verfahrensaktion
- 400: vierte Verfahrensaktion
- 500: fünfte Verfahrensaktion
- 600: sechste Verfahrensaktion

## Patentansprüche

1. Verfahren zum Betreiben eines hybriden Antriebssystems (1) eines Kraftfahrzeugs (2), wobei das hybride Antriebssystem (1) eine Verbrennungskraftmaschine (3) mit einem daran gekoppelten Riemenstartergenerator (4), ein Getriebe (5), einen Triebstranggenerator (6), einen Abgastrakt (7) für die Verbrennungsmaschine (3), eine Steuerungsvorrichtung (8) und einen Abtrieb (9) aufweist, wobei zwischen der Verbrennungskraftmaschine (3) und dem Getriebe (5) eine erste Kupplung (10) angeordnet ist, aufweisend:
- Fahren des Kraftfahrzeugs (2) auf eine erste Geschwindigkeit durch Ansteuern des hybriden Antriebssystems (1) durch die Steuerungsvorrichtung (8),
- Bewirken eines Betriebszustands des hybriden Antriebssystems (1) durch die Steuerungsvorrichtung (8), bei welchem die erste Kupplung (10) geöffnet ist,
- Abschalten der Verbrennungskraftmaschine (3) durch die Steuerungsvorrichtung (8),
- Detektieren einer Bremsanforderung zum Bremsen des Kraftfahrzeugs (2) durch die Steuerungsvorrichtung (8),
- Schließen der ersten Kupplung (10) zum Schleppen der Verbrennungskraftmaschine (3) sowie zum Betreiben des Riemenstartergenerators (4) in einem Rekuperationsmodus durch die Steuerungsvorrichtung (8), und
- Konfigurieren der Verbrennungskraftmaschine (3) durch die Steuerungsvorrichtung (8) derart, dass nur Einlassventile der Verbrennungskraftmaschine (3) während einer Rotation einer Kurbelwelle (12) der Verbrennungskraftmaschine (3) geschlossen bleiben.

2. Verfahren nach Anspruch 1,
**dadurch gekennzeichnet,**
**dass** die Steuerungsvorrichtung (8) die geschleppte Verbrennungskraftmaschine (3) gezielt derart konfiguriert, dass die Einlassventile und Auslassventile einen vordefinierten Luftstrom in den Abgastrakt (7) des Kraftfahrzeugs (2) fördern.

3. Verfahren nach Anspruch 2,
**dadurch gekennzeichnet,**
**dass** die Steuerungsvorrichtung (8) eine Kraftstoffeinspritzvorrichtung (13) zum gezielten Einspritzen von Kraftstoff in einen oder mehrere Zylinder der geschleppten Verbrennungskraftmaschine (3) ansteuert.

4. Verfahren nach einem der vorangegangenen Ansprüche,
**dadurch gekennzeichnet,**
**dass** der Triebstranggenerator über eine zweite Kupplung (11) mit dem Abtrieb des hybriden Antriebssystems mechanisch koppelbar ist, wobei die Steuerungsvorrichtung (8) die zweite Kupplung (11) zum Betreiben des Triebstranggenerators (6) in dem Rekuperationsmodus zum Bremsen des Kraftfahrzeugs (2) schließt.

5. Verfahren nach Anspruch 4,
**dadurch gekennzeichnet,**
**dass** die zweite Kupplung (11) zum Abbremsen des Kraftfahrzeugs (2) vor der ersten Kupplung (10) geschlossen wird.

6. Verfahren nach einem der vorangegangenen Ansprüche,
**dadurch gekennzeichnet,**
**dass** die erste Kupplung (10) wieder geöffnet wird, wenn das Kraftfahrzeug (2) eine zweite Geschwindigkeit erreicht, wobei die zweite Geschwindigkeit kleiner ist als die erste Geschwindigkeit.

7. Verfahren nach einem der vorangegangenen Ansprüche,
**dadurch gekennzeichnet,**
**dass** das Konfigurieren der Verbrennungskraftmaschine (3) durch die Steuerungsvorrichtung (8) ein Schalten einer Nockenwelle auf Nullnocken umfasst.

8. Verfahren nach einem der vorangegangenen Ansprüche,
**dadurch gekennzeichnet,**
**dass** mit einer Evakuierungsvorrichtung (14) des hybriden Antriebssystems (1) Luft aus dem Abgastrakt (7) evakuiert wird und/oder dass mittels einer Begasungsvorrichtung (15) des hybriden Antriebssystems (1) ein sauerstofffreies oder sauerstoffreduziertes Gas in den Abgastrakt (7) zum Verdrängen des im Abgastrakt (7) angeordneten Sauerstoffs eingebracht wird.

9. Hybrides Antriebssystem (1) für ein Kraftfahrzeug (2), aufweisend eine Verbrennungskraftmaschine (3) mit einem daran gekoppelten Riemenstartergenerator (4), ein Getriebe (5), einen Triebstranggenerator (6), einen Abgastrakt (7) für die Verbrennungsmaschine (3) und eine Steuerungsvorrichtung (8), wobei zwischen der Verbrennungskraftmaschine (3) und einem Abtrieb (9) des hybriden Antriebssystems (1) eine erste Kupplung (10) angeordnet ist,
**dadurch gekennzeichnet,**
**dass** das hybride Antriebssystem (1) zur Durchführung eines Verfahrens nach einem der vorangegangenen Ansprüche ausgebildet ist.

10. Kraftfahrzeug (2),
**dadurch gekennzeichnet,**
**dass** das Kraftfahrzeug (2) ein hybrides Antriebssystem (1) nach Anspruch 9 aufweist.

## Claims

1. Method for operating a hybrid drive system (1) of a motor vehicle (2), wherein the hybrid drive system (1) comprises an internal combustion engine (3) having a belt starter generator (4) coupled thereto, a transmission (5), a powertrain generator (6), an exhaust gas tract (7) for the internal combustion engine (3), a control device (8) and an output (9), wherein a first clutch (10) is arranged between the internal combustion engine (3) and the transmission (5), the method comprising:
- bringing the motor vehicle (2) to a first speed by controlling the hybrid drive system (1) by means of the control device (8),
- bringing about an operating state of the hybrid drive system (1), in which the first clutch (10) is opened, by means of the control device (8),
- switching off the internal combustion engine (3) by means of the control device (8),
- detecting, by means of the control device (8), a braking request for braking the motor vehicle (2),
- closing the first clutch (10) by means of the control device (8) for overrunning the internal combustion engine (3) and for operating the belt starter generator (4) in a recuperation mode, and
- configuring the internal combustion engine (3) by means of the control device (8) such that only inlet valves of the internal combustion engine (3) remain closed during a rotation of a crankshaft (12) of the internal combustion engine (3).

2. Method according to claim 1,
**characterized in that**
the control device (8) configures the overrun internal combustion engine (3) in a targeted manner such that the inlet valves and outlet valves convey a predefined air flow into the exhaust gas tract (7) of the motor vehicle (2).

3. Method according to claim 2,
**characterized in that**
the control device (8) controls a fuel injection device (13) for the targeted injection of fuel into one or more cylinders of the overrun internal combustion engine (3).

4. Method according to any of the preceding claims,
**characterized in that**
the powertrain generator can be mechanically coupled to the output of the hybrid drive system via a second clutch (11), the control device (8) closing the second clutch (11) in order to operate the powertrain generator (6) in the recuperation mode for braking the motor vehicle (2).

5. Method according to claim 4,
**characterized in that**
the second clutch (11) is closed before the first clutch (10) in order to brake the motor vehicle (2).

6. Method according to any of the preceding claims,
**characterized in that**
the first clutch (10) is opened again when the motor vehicle (2) reaches a second speed, the second speed being lower than the first speed.

7. Method according to any of the preceding claims,
**characterized in that**
the configuration of the internal combustion engine (3) by means of the control device (8) comprises switching a camshaft to null cams.

8. Method according to any of the preceding claims,
**characterized in that**
air is evacuated from the exhaust gas tract (7) using an evacuation device (14) of the hybrid drive system (1), and/or
**in that** an oxygen-free or oxygen-reduced gas is introduced into the exhaust gas tract (7) by means of a gassing device (15) of the hybrid drive system (1), in order to displace the oxygen situated in the exhaust gas tract (7).

9. Hybrid drive system (1) for a motor vehicle (2), comprising an internal combustion engine (3) having a belt starter generator (4) coupled thereto, a transmission (5), a powertrain generator (6), an exhaust gas tract (7) for the internal combustion engine (3), and a control device (8), a first clutch (10) being arranged between the internal combustion engine (3) and an output (9) of the hybrid drive system (1),
**characterized in that**
the hybrid drive system (1) is designed to carry out a method according to any of the preceding claims.

10. Motor vehicle (2),
**characterized in that**
the motor vehicle (2) comprises a hybrid drive system (1) according to claim 9.

## Revendications

1. Procédé permettant de faire fonctionner un système d'entraînement hybride (1) d'un véhicule automobile (2), dans lequel le système d'entraînement hybride (1) présente un moteur à combustion interne (3) comportant un générateur de démarreur à courroie (4) avec lequel il est accouplé, une transmission (5), un générateur de chaîne cinématique (6), une ligne de gaz d'échappement (7) pour le moteur à combustion interne (3), un dispositif de commande (8) et une sortie (9), dans lequel un premier embrayage (10) est disposé entre le moteur à combustion interne (3) et la transmission (5), présentant :
- la conduite du véhicule automobile (2) à une première vitesse en commandant le système d'entraînement hybride (1) par le dispositif de commande (8),
- la réalisation, par le dispositif de commande (8), d'un état de fonctionnement du système d'entraînement hybride (1) dans lequel le premier embrayage (10) est ouvert,
- l'arrêt du moteur à combustion interne (3) par le dispositif de commande (8),
- la détection d'une demande de freinage pour le freinage du véhicule automobile (2) par le dispositif de commande (8),
- la fermeture du premier embrayage (10) pour la remorque du moteur à combustion interne (3) ainsi que pour faire fonctionner le générateur de démarreur à courroie (4) dans un mode de récupération par le dispositif de commande (8), et
- la configuration du moteur à combustion interne (3) par le dispositif de commande (8) de telle sorte que seules les soupapes d'admission du moteur à combustion interne (3) restent fermées pendant une rotation d'un vilebrequin (12) du moteur à combustion interne (3).

2. Procédé selon la revendication 1,
**caractérisé en ce**
**que** le dispositif de commande (8) configure de manière ciblée le moteur à combustion interne (3) remorqué de telle sorte que les soupapes d'admission et les soupapes d'échappement transportent un flux d'air prédéfini dans la ligne de gaz d'échappement (7) du véhicule automobile (2).

3. Procédé selon la revendication 2,
**caractérisé en ce**
**que** le dispositif de commande (8) commande un dispositif d'injection de carburant (13) pour l'injection ciblée du carburant dans un ou plusieurs cylindres du moteur à combustion interne (3) remorqué.

4. Procédé selon l'une des revendications précédentes,
**caractérisé en ce**
**que** le générateur de chaîne cinématique peut être accouplé mécaniquement à la sortie du système d'entraînement hybride par l'intermédiaire d'un second embrayage (11), dans lequel le dispositif de commande (8) ferme le second embrayage (11) pour faire fonctionner le générateur de chaîne cinématique (6) dans le mode de récupération pour le freinage du véhicule automobile (2).

5. Procédé selon la revendication 4,
**caractérisé en ce**
**que** le second embrayage (11) est fermé pour le freinage du véhicule automobile (2) avant le premier embrayage (10).

6. Procédé selon l'une des revendications précédentes,
**caractérisé en ce**
**que** le premier embrayage (10) est à nouveau ouvert lorsque le véhicule automobile (2) atteint une seconde vitesse, la seconde vitesse étant inférieure à la première vitesse.

7. Procédé selon l'une des revendications précédentes,
**caractérisé en ce**
**que** la configuration du moteur à combustion interne (3) par le dispositif de commande (8) comprend une commutation d'un arbre à cames sur des cames zéro.

8. Procédé selon l'une des revendications précédentes,
**caractérisé en ce**
**qu'**un dispositif d'évacuation (14) du système d'entraînement hybride (1) permet d'évacuer l'air de la ligne de gaz d'échappement (7) et/ou en ce qu'un
dispositif de mise sous gaz (15) du système d'entraînement hybride (1) permet d'introduire un gaz exempt d'oxygène ou à teneur réduite en oxygène dans la ligne de gaz d'échappement (7) pour le refoulement de l'oxygène disposé dans la ligne de gaz d'échappement (7).

9. Système d'entraînement hybride (1) pour un véhicule automobile (2), présentant un moteur à combustion interne (3) comportant un générateur de démarreur à courroie (4) avec lequel il est accouplé, une transmission (5), un générateur de chaîne cinématique (6), une ligne de gaz d'échappement (7) pour le moteur à combustion interne (3) et un dispositif de commande (8), dans lequel un premier embrayage (10) est disposé entre le moteur à combustion interne (3) et une sortie (9) du système d'entraînement hybride (1),
**caractérisé en ce**
**que** le système d'entraînement hybride (1) est réalisé pour l'exécution d'un procédé selon l'une des revendications précédentes.

10. Véhicule automobile (2),
**caractérisé en ce**
**que** le véhicule automobile (2) présente un système d'entraînement hybride (1) selon la revendication 9.
